Europäisches Patentamt

European Patent Office

Office européen des brevets

(11) Publication number: **0 415 464 A2**

# EUROPEAN PATENT APPLICATION

(21) Application number: 90201684.9

(51) Int. Cl.5: **A23D 9/00**, A23L 1/308

(22) Date of filing: 26.06.90

(30) Priority: 30.06.89 EP 89201748

(43) Date of publication of application:
06.03.91 Bulletin 91/10

(84) Designated Contracting States:
AT BE CH DE DK ES FR GB GR IT LI NL SE

(71) Applicant: UNILEVER NV
Burgemeester s'Jacobplein 1 P.O. Box 760
NL-3000 DK Rotterdam(NL)

(84) BE

Applicant: UNILEVER PLC
Unilever House Blackfriars P.O. Box 68
London EC4P 4BQ(GB)

(84) GB

(72) Inventor: de Boer, Bernardus Cornelis Joseph
Unilever Research Lab., Olivier van
Noortlaan 120
NL-3133 AT Vlaardingen(NL)
Inventor: Kivits, Adrianus Antonius
Unilever Research Lab., Olivier van
Noortlaan 120
NL-3133 AT Vlaardingen(NL)

(74) Representative: Mulder, Cornelis Willem
Reinier, Dr. et al
UNILEVER N.V. Patent Division P.O. Box 137
NL-3130 AC Vlaardingen(NL)

(54) Edible fat-containing products containing carotenoids.

(57) The present invention pertains to edible fat-containing food products comprising an indigestible fat-replacer and a carotenoid selected on the basis of reduced hydrophobicity as expressed by its Retention Value. Having a Retention Value of 5 or more, the carotenoids of the invention are less sensitive to depletory effects by the indigestible fat-replacer.

EP 0 415 464 A2

## EDIBLE FAT-CONTAINING PRODUCTS CONTAINING CAROTENOIDS

The present invention relates to edible fat-containing products comprising an indigestible fat-replacer and a carotenoid.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, herein referred to as fat-replacers, which materials may be partially or fully indigestible. The terms fat and oil are used interchangeably.

Over the last decade many non-triglyceride fatty substances have been described as potential fat-replacers in food products. Examples thereof are waxes, e.g. jojoba oil and hydrogenated jojoba oil, polysiloxanes, acylated glycerides, polyalkoxyglycerolethers, dicarboxylic acid esters, polyol fatty acid polyesters and the epoxy extended derivatives thereof. Examples of disclosures of fat-replacers are e.g. DD 207 070, Journal of Food Science 49 , 419-428 (1984), US 3,600,186, US 4,005,195, US 4,005,196, US 4,034,083, US 4,582,715, US 4,582,9$\overline{2}$7, EP 0 233 856, EP 0 236 288, EP 0 235 836 and EP 0 254 547.

In particular polyol fatty acid polyesters, and more specifically the sugar fatty acid polyesters, such as e.g. the sucrose fatty acid polyesters, are receiving increased attention as low-calorie fat-replacers in edible products. Substantially indigestible for human beings they have physical and organoleptic properties very similar to triglyceride oils and fats conventionally used in edible products.

Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body.

In US 4,005,196 and US 4,034,083 indigestible sucrose fatty acid polyesters in the diet are reported to interfere with the absorption of the fat-soluble vitamins A, D, E and K. It is taught to overcome possible vitamin mal-absorption effects by fortifying the sucrose fatty acid polyester containing food compositions with fat-soluble vitamins.

An important fat-soluble vitamin is vitamin A, which is indispensible for normal development and functioning of the ectoderm, for normal growth, reproduction and vision. It usually occurs in nature esterified as the palmitate. In the human diet vitamin A requirements are partly met by direct animal sources, such as e.g. natural butter fats or cod liver oil, by added sources such as synthetic vitamin A in e.g. margarines, but also by (vegetable) sources of the very important class of carotenoids, which have provitamin A activity, i.e. are transformed in vivo to vitamin A.

In broad terms the class of carotenoids are all those compounds that have a close structural resemblence to 2 retinal (vitamin A) parts linked by a double bond replacing the aldehyde end groups in the retinal parts. This results in a structure composed of 8 isoprene units linked such that the 2 center methyl groups are separated by 6 and all other methyl groups by 5 carbon atoms. Carotenoids may be used for their provitamin A activity, but are also attractive for various other biological actions, such as in particular, their biological anti-oxidant behaviour. They are also known for us as pigments. In general the carotenoids are much more stable than vitamin A. Naturally occurring carotenoids are the well known $\alpha$-, $\beta$- and $\gamma$-carotenes. They occur in all green tissues of plants.

Substitution of the conventional absorbable fat or oil components in food products by an indigestible fat-replacer results in a reduction of the vitamin A and carotenoid absorption which is not only due to the interference by the indigestible fat-replacer with the absorption as such, but also due to a reduction of the vitamin A supply in the food due to substitution of e.g. butter-fats by fat-replacers which do not contain vitamin A.

In general malabsorption of vitamin A will only have long term effects since the human body regulates vitamin A levels in the blood from vitamin A storage in the liver. Conversely, carotenoids are not subject to an analogous regulation and therefor malabscrption of carotenoids may give rise to immediate effects with respect to their biological functions.

Although fortification in the sense of adding levels of vitamins or vitamin-like components may avoid any depletion problems, in many countries public opinion or legal restrictions resist high added levels of food additives. Accordingly, it is attractive to be able to supplement at levels as low as possible.

It has now been found that the degree to which indigestible fat-replacers, such as polyol fatty acid polyesters, interfere with the absorption of carotenoids, is strongly dependent upon the degree of hydrophobicity of the carotenoid used. The conventionally widely used carotene both as pigment and as provitamin A, is $\beta$-carotene. According to the present findings the interference by the indigestible fat-

2

replacers is significantly reduced when instead of e.g. β-carotene, carotenoids are used having a reduced hydrophobicity compared to β-carotene.

Surprisingly, it is found that carotenoids of lower hydrophobicity although still essentially water-insoluble at the relevant pH-range, apparently is easier removed from the indigestible fat-replacer phase in the gut to such extent that interference by the indigestible fat-replacer does not or to a much lesser extent occurs. The selection of the appropriate carotenoids in accordance with the present invention therefore allows lower levels of carotenoid suppletion in food products containing indigestible fat-replacers.

In particular, it has been found that a very convenient way to select carotenoids having suitable hydrohpobicities is to use a HPLC test method (which is described hereunder in more detail) providing a quick means for determining suitability for application in the present invention. The position of the particular carotenoid in the HPLC-chromatogram under certain specific chromatographic conditions determines suitable hydrophobicity of the carotenoid.

Accordingly, in its broadest aspects the present invention provides edible fat-containing products comprising an indigestible fat-replacer and a carotenoid having a Retention Value (defined hereunder) of 5 or more.

The indigestible fat-replacer may be any indigestible fatty material which in physical properties and rheology behaves similar to conventional triglyceride oils and fats. Suitable examples thereof have been given hereinbefore.

In this specification by 'indigestible' is meant that about 70 % by weight or more of the material concerned is not digested by the human body.

A preferred class of indigestible fat-replacers for inclusion in the edible fat-containing products of the invention are the polyol fatty acid polyesters.

Suitable polyol fatty acid polyesters are derived from aliphatic or aromatic polyols which comprise at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and α-methylglucoside. A particularly preferred polyol is sucrose.

The term 'polyol fatty acid polyester' is intended to refer to any such polyesters or mixtures thereof which have a degree of conversion of 70 % or more, i.e. of which, on an average, 70 % or more of the polyol hydroxyl groups have been esterified with fatty acids. Preferred polyol fatty acid polyesters for use in the present invention have degrees of conversion of 85 % or more, or even 95 % or more.

The fatty acid residues in the polyol fatty acid polyesters may be derived from naturally occurring or synthetic fatty acids per se, or suitable sources thereof, such as natural triglyceride fats and oils or their corresponding lower-alkyl esters. The fatty acids may be saturated or unsaturated, branched or straight fatty acids containing from 8 to 24 carbon atoms, in particular 12 to 18 carbon atoms, such as lauric, myristic, palmitic, stearic, oleic, elaidic, and linoleic acids. Suitable natural sources are the vegetable oils, such as sunflower, safflower, rapeseed, palm kernel, palm and soybean oils. If so required, conventional techniques may be used to first introduce the necessary degree of saturation. Suitable such techniques include full or partial hydrogenation, interesterification, and fractionation, and may be used before or after conversion to the polyol fatty acid polyesters.

The fat component in the compositions of the invention may consist solely of a single indigestible fat-replacer, but may also be a mixture of different indigestible fat-replacers or a mixture of indigestible fat-replacers and conventional triglyceride fats. Generally, at least 10 % by weight of the fat component of the edible compositions will consist of indigestible fat-replacer. However, in view of calorie reduction it is preferred that of from 50 % up to go or even 100 % of the fat component consists of the indigestible fat-replacer.

The optional conventional fat-component may be triglyceride oils or fats of animal or vegetable origin. Suitable conventional triglyceride fats and oils include, optionally partially or fully hydrogenated, coconut oil, palmkernel oil, palm oil, marine oils, lard, tallow fat, butter fat, cocoa butter fat, soybean oil, safflower oil, cotton seed oil, rapeseed oil, corn oil sunflower oil and mixtures thereof.

In terms of rheology the selection of the appropriate fat-replacer or mixture of fat-replacer and conventional fat strongly depends upon the particular application envisaged, and may range of fat-replacers having a fully fluid rheology to replace liquid oils in e.g. salad, frying or seasoning oils, to more viscous or even solid rheology in compositions having a more structured fat phase such as margarines, spreads, shortenings and confectionery products.

The required rheology and melting behaviour may be optimised to specific applications both by selection of an appropriate blend of fatty acids and/or selection of an appropriate blend of fat-replacers with different rheologies. If significant amounts of indigestible liquid fat-replacers are included it is often advantageous also to include certain amounts of hard-stock fatty material, either conventional solid fats or solid fat-replacer, and/or dietary fibre materials, to avoid too strong laxative or even anal-leakage effects.

The essential feature of the present invention is the inclusion of carotenoids. Suitable such carotenoids are characterised by a hydrophobicity which is lower than the hydrophobicity of $\beta$-carotene.

For the purposes of this invention suitable hydrophobicities can be expressed by way of a HPLC retention value as measured by a high performance liquid chromatography (HPLC) test method. The Retention Value (RV) is defined as

$$RV = 100 * (1/R_t),$$

in which $R_t$ is the retention time expressed in minutes, as determined by a reversed phase HPLC-chromatogram ($20°C$, flow rate: 0.7 ml/min, detection wave length: 450 nm) using as stationary phase a Nucleosil® column (type 5C18 / ET 250/8/4) ex Machery Nagel, Germany and as eluent an (isopropanol : methanol : water : acetic acid) mixture in a ratio by volume of (67.5 : 25.0 : 7.5 : 0.1).

Suitable carotenoids in accordance with the present invention have Retention Values of 5 or more, and in particular 6 to 40. Reduced hydrophobicity must not be such that the carotenoid is too hydrophylic. Good results have been obtained with derivatives characterized by a Retention Value of 10 to 30, derivatives having Retention Values of 15 to 25 being preferred.

Within the constraints of the above defined Retention Values suitable carotenoids have one or more functional groups providing reduced hydrophobicity. Suitable functional groups are hydroxyl, glucoside, keton, carboxylic acid, carboxylate ester and aldehyde groups.

Examples of suitable carotenoids are the hydroxycarotene compounds, such as 2-hydroxy-$\beta$-carotene, $\beta$-cryptoxanthin, $\alpha$-cryptoxanthin, isocryptoxanthine, zeaxanthin, lutein, neoxanthin, violaxanthin, and xanthophyll, the dihydro-derivatives, such as 5,6-dihydro-$\beta$-carotene, the glucoside derivatives, such as $1',2'$-dihydrohydroxytorulene glucoside and $1'$-glucosyloxy-$1',2'$-dihydro-$\beta,\psi$-carotene, the keton derivatives, such as echinenone, cryptocapsin, canthaxanthin and astaxanthin, the acid derivative, such as torularhodin, and the apocarotenoids, such as neurosporaxanthin, neurosporaxanthin methylester, $\beta$-apo-$8'$-carotenal, $\beta$-apo-$8'$-carotenoic acid, methyl $\beta$-apo-$8'$-carotenate, $\beta$-apo-$10'$-carotenal and $\beta$-apo-$10'$-carotenoic acid.

Particularly preferred carotenoids for use in the present invention are the diketon, dihydroxy and acid derivatives of the carotenoids and the apocarotenoic acids. Particularly preferred members are zeoxanthin, canthaxanthin, violaxanthin, astaxanthin, neurosporaxanthin, $\beta$-apo-$8'$-carotenoic acid and $\beta$-apo-$10'$-carotenoic acid.

In general the carotenoid may be included in the composition of the present invention in amounts ranging from as low as about 10 micrograms to as high as 5 mg per gram of the overall fat component in the product. In particular, the carotenoid is included in an amount of 50 micrograms to 2 mg per gram. Preferred amounts lie within the range of from 100 to 1000 micrograms per gram of fat component, and in many instances amounts of between 200 and 800 micrograms of carotenoid per gram of the overall fat component should be fully sufficient.

The present invention is not specific to edible fat-containing compositions in any particular food area. It may be suitably be applied to food products such as spreads, margarines, creams, salad oils, frying oils, shortenings, bakery products such as doughs, cakes and biscuits, fried and snack products, fresh, hard and processed cheeses, meat emulsions, mayonnaise and dressings, confectionery products, such as desserts, fillings, chocolates, candies, chews, and ice-creams.

To illustrate the invention there were carried out a series of comparative experiments to show the effect of relatively large amounts of polyol fatty acid polyester fat-replacer on the biological availability of carotenoids. The experiments involved 2 weeks' feeding trials of groups of 3-6 rats in which the carotenoid status in the liver was determined after 2 weeks. Diets (Table 2) with and without fat-replacer (liquid sucrose fatty acid polyester (SPE) - degree of conversion above 95 % - fatty acid residues derived from touch-hardened soybean oil (IV = 107)) were compared using four carotenoids in amounts of 2.5 mg / 1000 Kcal.

The results are presented in Table 1 and clearly show the advantageous effects on liver status of carotenoids having the higher Retention Values.

TABLE 1

| Liver carotenoid status after 2 weeks in nanogram/g of wet liver tissue | | | |
|---|---|---|---|
| | | average liver status | |
| carotenoid | RV | without SPE | with SPE |
| all-trans-lycopene | 2.7 | 1550 | 0 |
| $\beta$-carotene | 3.0 | 950 | 0 |
| zeaxanthin | 17.4 | 325 | 150 |
| $\beta$-apo-8'-carotenoic acid | 12.2 | 215 | 32 |

TABLE 2

| Basic diet used in the feeding trials expressed in g/1000 Kcal | |
|---|---|
| ingredients | diet B |
| Ca-caseinate | 60.7 |
| mineral mixture (Table 3) | 3.6 |
| vitamin mix (Table 4) | 1.0 |
| sunflower oil | 4.3 |
| lard | 17.2 |
| maize starch | 162.9 |
| Solkafloc UF-900® (fibre) | 30.0 |
| SPE-1 (optional) | 30.0 |

TABLE 3

| composition of mineral mixture used in diets | |
|---|---|
| ingredients | mg/1000 Kcal |
| potassium chloride | 350 |
| sec. magnesium phosphate | 956 |
| prim. potassium phosphate | 475 |
| potassium bicarbonate | 719 |
| calcium carbonate | 295 |
| trisodium 2 hydrate | 711 |
| magnesium sulphate | 51.4 |
| ferric (III) citrate | 43.9 |
| copper citrate | 4.7 |
| zinc citrate | 15 |
| potassium iodate | 0.07 |

TABLE 4

| composition of vitamin mixture used in diets | |
|---|---|
| ingredients | mg/1000 Kcal |
| choline chloride (50 %) | 500 |
| myo-inositol | 25.0 |
| calcium silicate | 50.0 |
| calcium pantothenic acid | 5.0 |
| niacin | 5.0 |
| biotin | 0.05 |
| vitamin B-1 | 1.5 |
| vitamin B-2 | 1.5 |
| vitamin B-6 | 0.5 |
| vitamin B-12 (1000 mg/kg) | 5.0 |
| vitamin D-3 (80 IU/mg) | 3.1 |
| dl-$\alpha$-tocopheryl acetate | 10.0 |
| vitamin K-3 (22.7 %) | 1.0 |
| folic acid | 0.25 |
| sucrose | 394.5 |

**Claims**

1. Edible fat-containing product comprising an indigestible fat-replacer and an carotenoid, characterised in that the carotenoid has a Retention Value of 5 or more.

2. Product according to claim 1 in which the carotenoid has a Retention Value of 10 to 30.

3. Product according to claim 2 in which the carotenoid has a Retention value of 15 to 25.

4. Product according to any one of the preceding claims in which the carotenoid has a functional group selected from hydroxyl, glucoside, keton, carboxylic acid, carboxylate ester and aldehyde groups.

5. Product according to claim 4 in which the carotenoid is selected from the group of 2-hydroxy-$\beta$-carotene, $\beta$-cryptoxanthin, $\alpha$-cryptoxanthin, isocryptoxanthine, zeaxanthin, lutein, neoxanthin, violaxanthin, xanthophyll, 1$'$,2$'$-dihydro-hydroxytorulene glucoside, 1$'$-glucosyloxy-1$'$,2$'$-dihydro-$\beta$,$\psi$-carotene, echinenone, cryptocapsin, canthaxanthin, astaxanthin, torularhodin, neurosporaxanthin, neurosporaxanthin methylester, $\beta$-apo-8$'$-carotenal, $\beta$-apo-8$'$-carotenoic acid, methyl $\beta$-apo-8$'$-carotenate, $\beta$-apo-10$'$-carotenal and $\beta$-apo-10$'$-carotenoic acid.

6. Product according to claim 5 in which the carotenoid is selected from the group of zeoxanthin, canthaxanthin, violaxanthin, astaxanthin, neurosporaxanthin, $\beta$-apo-8$'$-carotenoic acid and $\beta$-apo-10$'$-carotenoic acid.

7. Product according to any one of the preceding claims in which the indigestible fat-replacer is a polyol fatty acid polyester derived from a polyol selected from the group of sugar polyols having at least four free hydroxyl groups, and in which the fatty acid residues contain from 8 to 24 carbon atoms.

8. Product according to claim 7 in which the polyol fatty acid polyester is derived from sucrose and has a degree of conversion of 85 % or more.

9. Product according to any one of the preceding claims in which from 50 % up to 90 of the fat component consists of the indigestible fat-replacer.

10. Product according to any one of the preceding claims in which the carotenoid is included in an amount of 100 to 1000 micrograms per gram of the overall fat component in the product.